(19) Europäisches Patentamt
European Patent Office
Office européen des brevets

(11) **EP 4 394 730 A1**

(12) **DEMANDE DE BREVET EUROPEEN**

(43) Date de publication:
**03.07.2024 Bulletin 2024/27**

(21) Numéro de dépôt: **23220204.4**

(22) Date de dépôt: **25.12.2023**

(51) Classification Internationale des Brevets (IPC):
**G06V 20/69** (2022.01)  **G06V 10/82** (2022.01)
**G06V 10/778** (2022.01)

(52) Classification Coopérative des Brevets (CPC):
**G06V 20/698; G06V 10/778; G06V 10/82**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **27.12.2022 FR 2214560**

(71) Demandeur: **Commissariat à l'énergie atomique et aux énergies alternatives**
**75015 Paris (FR)**

(72) Inventeurs:
• **GODEFROY, Guillaume**
**38054 Grenoble cedex 09 (FR)**
• **ALLIER, Cédric**
**38054 Grenoble cedex 09 (FR)**

(74) Mandataire: **INNOV-GROUP**
**310, avenue Berthelot**
**69372 Lyon Cedex 08 (FR)**

(54) **PROCÉDÉ DE TRAITEMENT D'UNE IMAGE D'UN ÉCHANTILLON COMPORTANT DES PARTICULES BIOLOGIQUES**

(57)     Procédé de caractérisation de particules biologiques d'un échantillon, la caractérisation visant à déterminer une propriété de chaque particules, , le procédé comportant :
- a) mesure d'une caractéristique d'au moins une particule de l'échantillon ;
- b) traitement de la caractéristique de la ou de chaque particule par un algorithme d'intelligence artificielle;
- c) à partir du traitement, caractérisation des particules de l'échantillon, de manière à assigner une classe à chaque particule, chaque classe étant représentative de la propriété de la particule ;
- le procédé étant caractérisé en ce que l'algorithme d'intelligence artificielle a préalablement fait l'objet d'un apprentissage par labels, à partir d'échantillons d'apprentissages, à chaque échantillon d'apprentissage étant assigné une proportion de cellules dans chaque classe, de façon que l'apprentissage est effectué en fonction des proportions respectivement assignées à chaque échantillon d'apprentissage.

**Fig. 3A**

EP 4 394 730 A1

**Description**

## DOMAINE TECHNIQUE

Le domaine technique de l'invention et le traitement d'un échantillon comportant des particules biologiques.

## ART ANTERIEUR

Les évolutions récentes dans le domaine de l'intelligence artificielle trouvent des applications dans le domaine de la microbiologie. Des réseaux de neurones ont déjà été utilisés à des fins d'analyse d'images acquises par des microscopes. WO2021/156192 décrit le recours à un réseau de neurones à apprentissage supervisé pour identifier des microorganismes se développant. EP3995991 décrit le recours à un réseau de neurones à apprentissage supervisé pour identifier des cellules se divisant dans un échantillon. Dans les deux documents précités, le réseau de neurones est alimenté par une image d'un échantillon, acquise par un microscope.

Une difficulté liée à l'apprentissage supervisé est la nécessité d'obtenir des images d'apprentissage annotées, c'est-à-dire des images sur lesquelles les particules, qu'il s'agisse de cellules ou de microorganismes, sont individuellement annotées, en fonction de leurs propriétés respectives. Ces images d'apprentissage servent à paramétrer le réseau de neurones. L'obtention des annotations individuelles est une opération souvent fastidieuse, au cours de laquelle un opérateur doit travailler sur un grand nombre d'images, et effectuer manuellement les annotations individuelles de chaque particule.

Le document US2019/180147A1 décrit un procédé permettant de limiter l'annotation individuelle lors de l'image d'apprentissage. Le procédé décrit dans ce document est initialisé par des images de particules annotées. La particularité de l'algorithme est que l'initialisation est effectuée à partir d'un faible nombre de particules : il s'agit d'un algorithme de classification est évolutif : au cours d'acquisitions successives d'image, des nouvelles particules peuvent être classifiées dans de nouvelles classes. Ainsi, au fur et à mesure de l'acquisitions de nouvelles images de particules, les classes peuvent être adaptées.

L'invention exposée ci-après permet d'alléger cette contrainte. Elle permet d'utiliser un algorithme d'intelligence artificielle à apprentissage supervisé, en facilitant l'obtention des annotations permettant l'apprentissage.

## EXPOSE DE L'INVENTION

Un premier objet de l'invention est un procédé de caractérisation de particules biologiques d'un échantillon, la caractérisation assignant une classe à chaque particule, chaque classe étant représentative d'une propriété de la particule, le procédé comportant :

- a) détermination d'une caractéristique d'au moins une particule de l'échantillon ;
- b) traitement de la caractéristique de la ou de chaque particule par un algorithme d'intelligence artificielle;
- c) à partir du traitement, caractérisation des particules de l'échantillon, de manière à assigner une classe à chaque particule ;

le procédé étant caractérisé en ce que l'algorithme d'intelligence artificielle a préalablement fait l'objet d'un apprentissage par proportion de labels, avec au moins un échantillon d'apprentissage, comportant des particules d'apprentissage, l'apprentissage comportant,:

- (i) détermination d'une caractéristique de chaque particule d'apprentissage ;
- (ii) détermination d'une proportion de particules d'apprentissage appartenant à la même classe;
- (iii) annotation de chaque particule d'apprentissage en fonction de la proportion déterminée lors de l'étape (ii).
- (iv) utilisation des caractéristiques des particules d'apprentissage, déterminées lors de (i) respectivement annotées à partir des annotations résultant de (iii) en tant que données d'apprentissage de l'algorithme d'intelligence artificielle.

De préférence :

- les étapes (i) à (iii) sont effectuées pour différents échantillons d'apprentissage ;
- chaque étape (ii) comporte une détermination d'une proportion de particules d'apprentissage, appartenant à la même classe, respectivement dans chaque échantillon d'apprentissage ;
- les annotations respectives des particules d'apprentissage d'un même échantillon d'apprentissage peuvent être identiques.

La propriété peut être choisie parmi :

- une détermination de l'état d'une particule, chaque classe correspondant à un état prédéterminé de la particule ;
- une détermination d'un volume ou d'une dimension d'une particule, chaque classe correspondant à au moins une valeur du volume ou d'une dimension de chaque particule ;
- une détermination d'une caractéristique morphologique de chaque particule, chaque classe correspondant à au moins une caractéristique morphologique de chaque particule ;
- une détermination d'une propriété optique de chaque particule, chaque classe correspondant à au moins une valeur de ladite propriété optique ;
- une détermination d'un type de chaque particule, chaque classe correspondant à un type de particule prédéterminé.

Le nombre de classes peut être égal à 2. Le nombre de classes peut être supérieur à 2.

Selon une possibilité,

- la caractéristique de chaque particule est une image de ladite particule ;
- lors de l'étape i), chaque caractéristique est une image individuelle de chaque particule du ou de chaque échantillon d'apprentissage.

Selon une possibilité,

- l'étape a) comporte une acquisition d'une image d'un ensemble de particules de l'échantillon ;
- Lors de l'étape b), l'image acquise lors de l'étape a) est utilisée en tant que donnée d'entrée de algorithme d'intelligence artificielle.

Selon un mode de réalisation,

- l'étape a) comporte

  - Illumination de l'échantillon par une onde lumineuse et acquisition d'une image de l'échantillon par une modalité d'imagerie défocalisée ou sans lentille, l'image acquise comportant des figures de diffraction de particules de l'échantillon ;
  - une application d'un algorithme de reconstruction holographique à l'image acquise de l'échantillon, de façon à obtenir une image de phase de chaque particule, l'image de phase étant représentative d'un déphasage, par chaque particule, de l'onde lumineuse illuminant l'échantillon ;
  - l'image de phase de chaque particule forme la caractéristique de chaque particule ;

- lors de l'étape b), l'image de phase obtenue lors de l'étape a) est utilisée en tant que donnée d'entrée de algorithme d'intelligence artificielle.

Lors de l'étape (i), la caractéristique de chaque particule peut être une image de phase de chaque particule ;
Selon un mode de réalisation,

- l'étape a) comporte

  - Illumination de l'échantillon par une onde lumineuse et acquisition d'une image de l'échantillon par une modalité d'imagerie défocalisée ou sans lentille, l'image comportant des figures de diffraction de particules de l'échantillon ;
  - une application d'un algorithme de reconstruction holographique à l'image acquise de l'échantillon, de façon à obtenir pour au moins une particule, un profil d'une propriété optique de l'onde lumineuse illuminant l'échantillon à différentes distances de l'échantillon ;

- le profil de la ou de chaque particule forme la caractéristique de ladite particule ;

- lors de l'étape b), le ou chaque profil obtenu lors de l'étape a) est utilisé en tant que donnée d'entrée de algorithme d'intelligence artificielle.

Chaque particule peut être une cellule ou un microorganisme.

Un autre objet de l'invention est un dispositif de caractérisation de particules biologiques d'un échantillon, la caractérisation étant destinée à assigner une classe à chaque particule, chaque classe étant représentative d'une propriété de la particule, le dispositif comportant :

- une source de lumière, configurée pour illuminer l'échantillon ;
- un capteur d'image, configuré pour acquérir une image de l'échantillon ;
- une unité de traitement, programmée pour mettre en oeuvre les étapes b) et c) d'un procédé selon le premier objet de l'invention, l'algorithme d'intelligence artificielle mis en oeuvre par l'unité de traitement ayant préalablement fait l'objet d'un apprentissage par proportion de labels, à partir d'échantillons d'apprentissage, comportant des particules d'apprentissage, l'apprentissage mettant en oeuvre les étapes (i) à (iv) d'un procédé selon le premier objet de l'invention.

L'invention sera mieux comprise à la lecture de l'exposé des exemples de réalisation présentés, dans la suite de la description, en lien avec les figures listées ci-dessous.

### FIGURES

La figure 1A schématise un exemple de dispositif selon l'invention.
La figure 1B schématise un autre exemple de dispositif selon l'invention.
Les figures 2A, 2B et 2C montrent des images de différents échantillons comportant des cellules vivantes et des cellules mortes.
Les figures 3A, 3B et 3C montrent des images de cellules destinées à un apprentissage par labels d'un réseau de neurones mis en oeuvre par le dispositif selon l'invention.
Les figures 4A, 4B et 4C montrent des profils appartenant respectivement à trois classes différentes.
La figure 5 représente la proportion de cellules vivantes (axe des ordonnées) pour différentes cellules (axe des abscisses).
La figure 6 schématise les principales étapes d'un procédé selon l'invention.

## EXPOSE DE MODES DE REALISATION PARTICULIERS

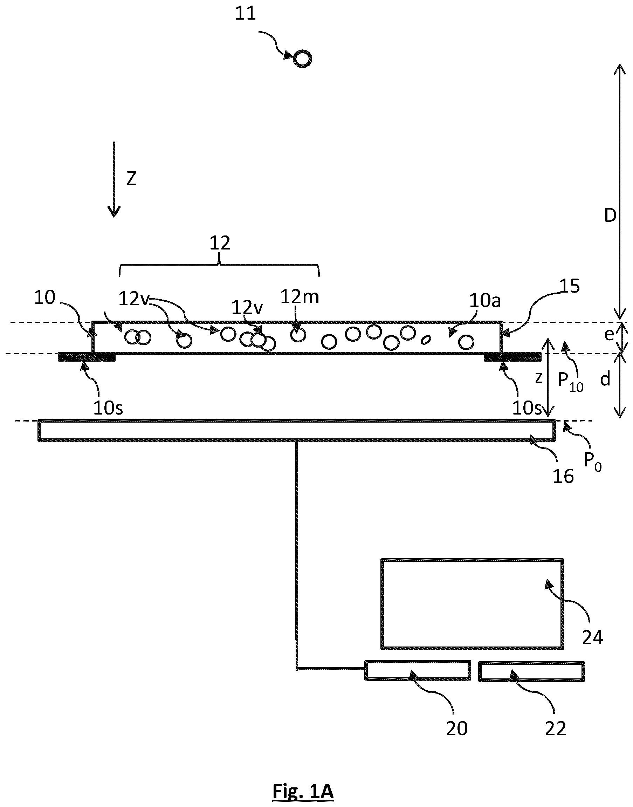

La figure 1A représente un exemple de dispositif selon l'invention. Une source de lumière 11 est configurée pour émettre une onde lumineuse se propageant vers un échantillon 10, selon un axe de propagation Z. L'onde lumineuse est émise selon une bande spectrale $\Delta\lambda$.

L'échantillon 10 est un échantillon comportant des particules biologiques 12, en particulier des cellules ou des microorganismes, que l'on souhaite caractériser. Il peut également s'agir de spores, ou des microbilles, usuellement mises en oeuvre dans des applications biologiques, ou encore des microalgues. Dans l'exemple décrit, les particules 12 sont des cellules CHO (cellules ovariennes de hamster) baignant dans un tampon salin liquide 10a. De préférence, les particules 12 ont un diamètre, ou sont inscrites dans un diamètre, inférieur à 100 $\mu$m, et de préférence inférieur à 50 $\mu$m ou 20 $\mu$m. De préférence, les particules ont un diamètre, ou sont inscrites dans un diamètre, supérieur à 500 nm ou 1 $\mu$m .

Dans l'exemple représenté sur la figure 1A, l'échantillon comprend un milieu 10a dans lequel baignent les particules 12. Les particules 12 sont, dans cet exemple, des cellules, dont on souhaite déterminer l'état : état vivant ou état mort. Le milieu 10a, dans lequel baignent les particules, peut notamment être un liquide, par exemple un milieu de culture.

L'échantillon 10 est, dans cet exemple, contenu dans une chambre fluidique 15. La chambre fluidique 15 est par exemple une chambre fluidique de type Countess ® d'épaisseur e=100 $\mu$m. L'épaisseur e de l'échantillon 10, selon l'axe de propagation Z varie typiquement entre 10 $\mu$m et 1 cm, et est de préférence comprise entre 20 $\mu$m et 500 $\mu$m. L'échantillon 10 s'étend selon un plan, dit plan de l'échantillon, de préférence perpendiculaire à l'axe de propagation Z. Il est maintenu sur un support 10s à une distance d d'un capteur d'image 16.

La distance D entre la source de lumière 11 et l'échantillon 10 est de préférence supérieure à 1 cm. Elle est de préférence comprise entre 2 et 30 cm. Avantageusement, la source de lumière, vue par l'échantillon, est considérée comme ponctuelle. Cela signifie que son diamètre (ou sa diagonale) est préférentiellement inférieur au dixième, mieux au centième de la distance entre l'échantillon et la source de lumière. La source de lumière 11 peut être une diode électroluminescente comme représenté sur la figure 1A. Elle peut être associée à un diaphragme ou filtre spatial ou une fibre optique. La source de lumière 11 peut être une source laser, telle une diode laser.

De préférence, la bande spectrale d'émission $\Delta\lambda$ de l'onde lumineuse émise par la source a une largeur inférieure à 100 nm. Par largeur de bande spectrale, on entend une largeur à mi-hauteur de ladite bande spectrale.

L'échantillon 10 est disposé entre la source de lumière 11 et le capteur d'image 16 précédemment évoqué. Ce dernier s'étend de préférence parallèlement, ou sensiblement parallèlement à l'échantillon. Le terme sensiblement parallèlement signifie que les deux éléments peuvent ne pas être rigoureusement parallèles, une tolérance angulaire de quelques degrés, inférieure à 20° ou 10° étant admise. Le capteur d'image 16 est apte à former une image I selon un plan de détection $P_0$. Dans l'exemple représenté, il s'agit d'un capteur d'image comportant une matrice de pixels, de type CCD ou un CMOS. Le plan de détection $P_0$ s'étend de préférence perpendiculairement à l'axe de propagation Z de l'onde lumineuse incidente.

La configuration représentée sur la figure 1A est une configuration en imagerie sans lentille, selon laquelle il n'y a pas d'optique de formation d'image entre l'échantillon et le capteur d'image. Cela n'empêche pas la présence éventuelle de microlentilles de focalisation au niveau de chaque pixel du capteur d'image 16, ces dernières n'ayant pas de fonction de grandissement de l'image acquise par le capteur d'image.

La distance d entre l'échantillon 10 et la matrice de pixels du capteur d'image 16 est avantageusement comprise entre 50 $\mu$m et 2 cm, de préférence comprise entre 100 $\mu$m et 2 mm.

Le dispositif comporte une unité de traitement 20, programmée pour mettre en oeuvre les opérations décrites par la suite. Les instructions suivies par l'unité de traitement sont stockées dans une mémoire 22, connectée à l'unité de traitement par liaison filaire ou sans fil. L'unité de traitement 20 peut par exemple comporter un microprocesseur. L'unité de traitement peut être reliée à un écran 24.

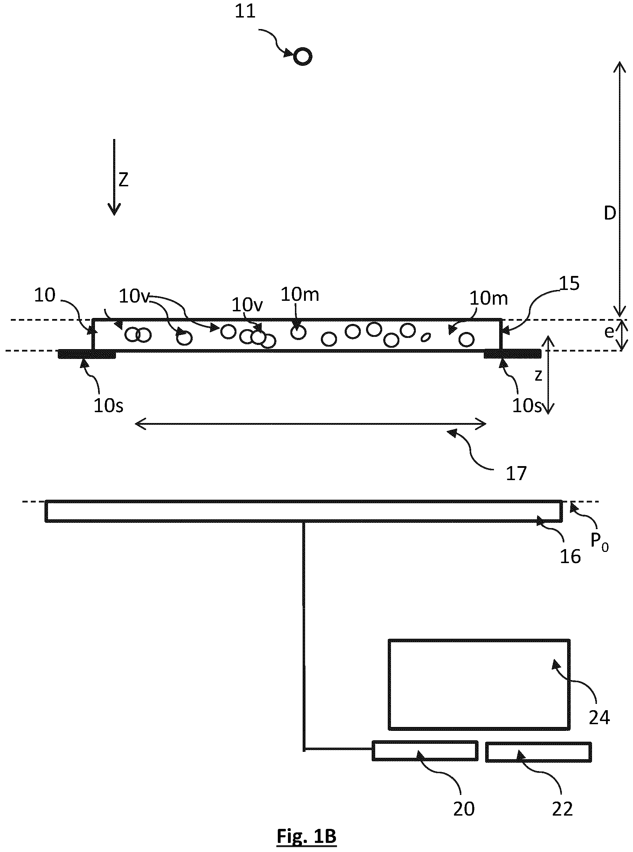

Sur la figure 1B, on a représenté une autre configuration, selon laquelle le dispositif comporte un système optique 17, de type lentille 17, ou association de lentilles. Le système optique peut être configuré pour former une image focalisée de l'échantillon sur le plan de détection du capteur d'image. De façon alternative, le système optique peut être configuré pour former une image défocalisée de l'échantillon. Le système optique comporte un plan objet et un plan image.

On obtient une image défocalisée lorsque le plan objet et/ou le plan image sont légèrement décalés respectivement par rapport à l'échantillon ou au plan de détection. Par légèrement décalé, on entend selon une distance de décalage de quelques dizaines de $\mu$m.

L'unité de traitement 20 met en oeuvre un algorithme d'intelligence artificielle à apprentissage par proportions de labels, à partir de chaque image acquise par le capteur d'image. L'algorithme est un réseau de neurones, formé de vingt couches de convolution, suivies d'un perceptron multicouches. L'objectif de l'algorithme est d'assigner une classe aux cellules, en fonction d'une propriété des cellules. Dans cet exemple, deux classes sont considérées : cellule vivante ou cellule morte.

D'une façon plus générale, la classification opérée par l'algorithme vise à caractériser les cellules présentes dans l'échantillon. Par caractérisation, on entend une détermination d'une propriété d'une particule. La propriété peut être :

- une nature d'une particule, c'est-à-dire une classification de cette particule parmi une ou plusieurs classes prédéterminées ; il peut s'agir par exemple d'identifier différents types de particules.
- un état d'une particule, parmi un ou plusieurs états prédéterminés, par exemple un état vivant ou un état mort ;
- une taille d'une particule, ou de sa forme, ou de son volume ou tout autre paramètre géométrique ou morphologique : dans ce cas, la propriété peut notamment être une appartenance de la particule à une plage de taille (par exemple diamètre compris entre x et y), ou à une plage de volume, ou à une plage de tout autre paramètre géométrique ou morphologique ;
- une propriété optique d'une ou plusieurs particules, par exemple l'indice de réfraction ou une propriété de transmission optique dans ce cas, la propriété peut notamment être une appartenance de la particule à une plage de valeurs de ladite propriété (par exemple indice de réfraction compris entre x et y) ;
- un dénombrement desdites particules en fonction de leur caractérisation, par exemple un dénombrement de particules de même classe.

L'algorithme vise à déterminer, pour chaque particule, une probabilité d'appartenance à une classe. Chaque classe est représentative de la valeur de la propriété (par exemple mort ou vivant, ou identification de la particule), ou d'une plage de valeurs de la propriété (par exemple une plage de dimensions, ou une plage de valeurs d'indice de réfraction).

L'algorithme d'intelligence artificielle a préalablement fait l'objet d'un apprentissage par labels, à partir d'échantillons d'apprentissage. A chaque échantillon d'apprentissage on a préalablement assigné une proportion de cellules dans chaque classe, de sorte que l'apprentissage est effectué en fonction des proportions respectivement assignées à chaque échantillon d'apprentissage.

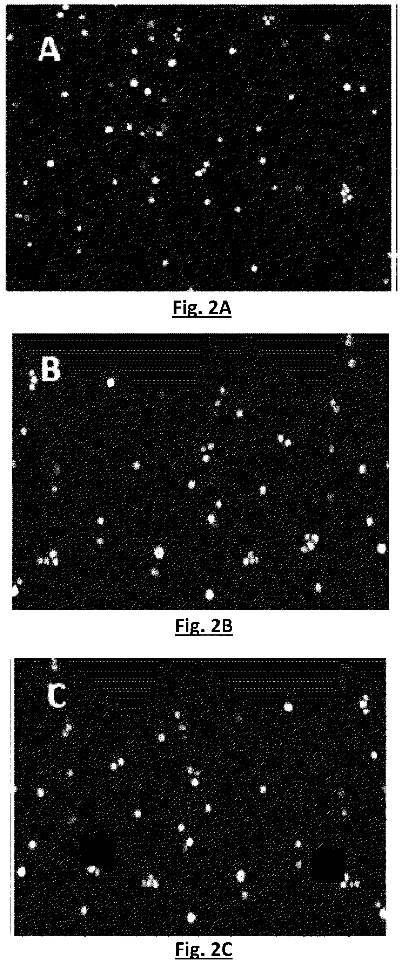

Les figures 2A, 2B et 2C représentent trois images de trois échantillons d'apprentissage différents. Il s'agit d'échantillons d'apprentissage dont les cellules ont fait l'objet d'une analyse par cytométrie. Cette analyse permet de déterminer des proportions de cellules vivantes et de cellules mortes. Une particularité des images d'apprentissage est que les cellules ne sont pas individuellement annotées en fonction de leur état (vie ou mort). Pour les cellules d'un même échantillon d'apprentissage, on dispose des proportions de cellules, dans l'échantillon d'apprentissage, appartenant à la même classe. Dans cet exemple, il s'agit du pourcentage de cellules vivantes et mortes dans le même échantillon d'apprentissage. Ainsi, chaque cellule d'apprentissage d'un échantillon d'apprentissage est annotée en fonction d'une quantité ou d'une proportion de cellules appartenant à la même classe, dans l'échantillon d'apprentissage.

Les cellules, dans chaque échantillon d'apprentissage, ne sont pas annotées individuellement en fonction de leur état mort ou vivant, mais en fonction d'une proportion de cellules mortes ou vivantes dans l'échantillon d'apprentissage. Ainsi, au sein d'un même échantillon d'apprentissage, les annotations de chaque cellule sont de préférence identiques. De telles annotations, basées sur des proportions de cellules ayant les mêmes propriétés, sont plus facilement accessibles, en mettant en oeuvre des moyens de mesure automatisés, par exemple la cytométrie.

Dans cet exemple, les images de l'échantillon sont acquises selon une configuration d'imagerie sans lentille. L'échantillon est illuminé par un onde lumineuse produite par une source de lumière. Dans l'image acquise, chaque particule apparaît sous la forme d'une figure de diffraction. En utilisant un algorithme de reconstruction holographique, on peut former une image de phase de l'échantillon. Sur l'image de phase, chaque particule apparaît sous la forme d'une image de phase élémentaire, traduisant le déphasage de l'onde lumineuse par la particule. Une telle image de phase peut être obtenue en mettant en oeuvre des algorithmes de reconstruction connus. Des exemples d'algorithmes de reconstruction sont décrits dans US10816454.

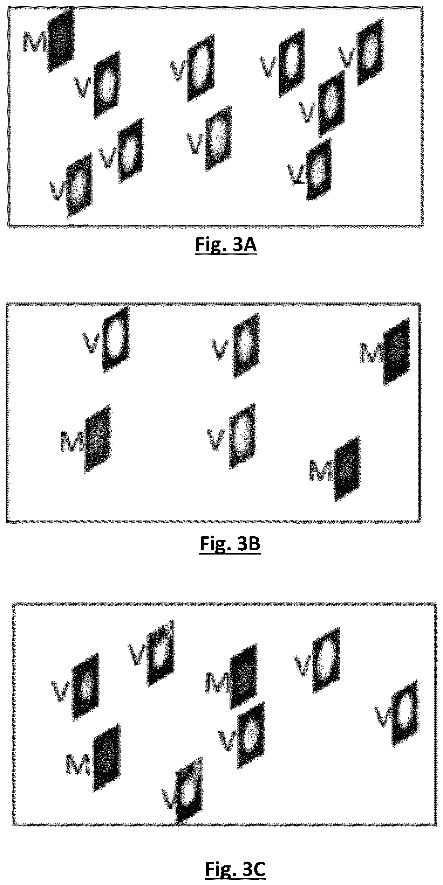

A partir de chaque image, l'apprentissage du réseau de neurones est effectué à partir d'images élémentaires de chaque cellule, telles que représentées sur les figures 3A à 3C. Ainsi, l'apprentissage du réseau de neurones est formé, à partir de chaque image d'un échantillon d'apprentissage :

- par une proportion de cellules dans chaque état, dans l'échantillon d'apprentissage; dans le cas présent, on indique une proportion de cellules vivantes et/ou mortes, ce qui correspond à une proportion de labels dans l'échantillon d'apprentissage;
- par une extraction de vignettes, ou images élémentaires, de chaque cellule isolée, chaque vignette étant annotée par la proportion de cellules, dans chaque état, dans l'échantillon d'apprentissage. De préférence, chaque vignette ne comporte qu'une seule cellule, isolée des autres cellules, comme représenté sur les figures 3A à 3C.

Le recours à un algorithme basé sur un apprentissage par proportions de labels facilite l'apprentissage, car cela évite une annotation individuelle de chaque cellule, en fonction de leur état, une telle opération étant longue. L'obtention de proportions de cellules vivantes ou mortes peut se faire globalement sur différents échantillons d'apprentissage, avec une méthode rapide et fiable de type cytométrie.

Au cours de l'utilisation du réseau de neurones sur un échantillon inconnu, un score est attribué à chaque cellule, le score étant représentatif de la classe à laquelle la cellule appartient. Dans cet exemple, les images d'apprentissage sont associées à des proportions relatives de cellules vivantes et de cellules mortes. Lors du traitement d'une image inconnue, l'algorithme détermine un score pour chaque cellule, le score correspondant à la classe attribuée à chaque cellule, en l'occurrence la classe « cellule vivante » ou la classe « cellule morte ».

Les figures 3A à 3C montrent des images d'échantillons d'apprentissage dans lesquelles les proportions de cellules vivantes sont respectivement 90%, 50%, 75%. On a représenté, sur les figures, des vignettes centrées sur chaque cellule, qu'elles soient vivantes ou mortes. Comme précédemment indiqué, on a indiqué, à côté de chaque vignette, la classe des cellules (V pour vivante, M pour morte). Ces annotations ne sont pas utilisées lors de l'apprentissage. Lors de l'apprentissage, chaque vignette est annotée en fonction de la proportion de cellules vivantes dans l'échantillon d'apprentissage.

Sur l'image du premier échantillon d'apprentissage (figure 3A), on dénombre 9 cellules vivantes et 1 cellule morte, soit une proportion de 90% de cellules vivantes. Sur l'image du deuxième échantillon d'apprentissage (figure 3B), on dénombre 3 cellules vivantes et 3 cellules mortes, soit une proportion de 50 % de cellules vivantes. Sur l'image du troisième échantillon d'apprentissage (figure 3C), on dénombre 6 cellules vivantes et 2 cellules mortes, soit une proportion de 75% de cellules vivantes.

Dans cet exemple, l'apprentissage du réseau de neurones est effectué en minimisant une fonction de coût, basée sur une norme de type L2. Suite à l'apprentissage, le réseau de neurones affecte, à chaque cellule vivante, un score correspondant à la moyenne des proportions de cellules vivantes lors de l'étape d'apprentissage, en l'occurrence $(9 \times 0.9 + 3 \times 0.5 + 6 \times 0.75)/ (9 + 3 + 6) = 0,78$. De façon similaire, lors du traitement d'une image inconnue, le réseau de neurones affecte, à chaque cellule morte, un score correspondant à la moyenne des proportions de cellules mortes lors de l'étape d'apprentissage, en l'occurrence $(1 \times 0.1 + 3 \times 0.5 + 2 \times 0.25)/ (1 + 3 + 2) = 0,35$.

Bien que décrit en lien avec deux classes, le principe est généralisable à un nombre de classes plus élevé. Si $i$ désigne une image d'apprentissage et $j$ désigne une classe, le score prédit par le réseau de neurones pour une cellule de classe $j$ est égal à $\dfrac{\sum_i^M N_{i,j} Y_{i,j}}{\sum_i^M N_{i,j}}$ où

- $N_{i,j}$ est la quantité de cellules de classe j dans une image i ;
- $Y_{i,j}$ est la proportion de cellules de classe j dans l'image i ;
- $N_{i,j} = N_i Y_{i,j}$ où $N_i$ est le nombre de cellules dans l'image i.

- M est la quantité d'images d'apprentissage ;

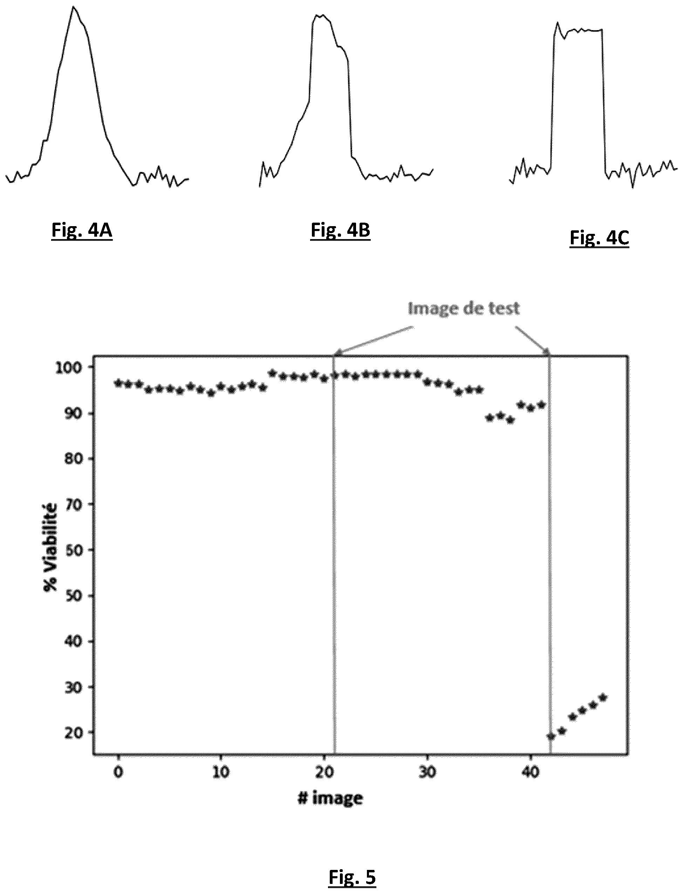

On a testé l'approche précédemment décrite en prenant en compte un exemple de classification de vecteurs à 1 dimension. Les figures 4A, 4B et 4C montrent trois profils différents, représentatifs de trois classes :

- Classe 1 : profil gaussien - cf. figure 4A.
- Classe 2 : profil gaussien combiné à une porte - cf. figure 4B.
- Classe 3 : profil Porte - cf. figure 4C.

On a généré environ 50 000 profils, chaque profil appartenant à l'une des trois classes, répartis dans 100 échantillons d'apprentissage. Chaque échantillon d'apprentissage comportait entre 400 et 600 profils. Dans chaque échantillon d'apprentissage , on connaissait la quantité relative de chaque profil, variant entre 0% et 80%. Sur les profils, les largeurs des pics et le bruit autour de chaque pic a été choisi aléatoirement, de manière à obtenir une variabilité dans le jeu de données d'apprentissage.

Suite à l'apprentissage, on a utilisé 10 échantillons de test comportant une quantité aléatoire de profils appartenant à chaque classe. Les 10 échantillons de test comportaient 4300 profils. La matrice de confusion du test est représentée ci-dessous : Cette matrice donne le nombre de profils, dont la classe réelle correspond au numéro de colonne, détectés dans une classe correspondant au numéro de la ligne.

$$\begin{bmatrix} 1.7E+3 & 0 & 0 \\ 0 & 1.8E+3 & 0 \\ 3 & 0 & 1.8E+3 \end{bmatrix}$$

La matrice de confusion témoigne de la fiabilité de la classification effectuée par l'algorithme.

La méthode a été mise en oeuvre sur des échantillons comportant des cellules CHO (cellules ovariennes de hamster) chaque échantillon étant contenu dans une chambre fluidique d'épaisseur 100 $\mu$m disposé à une distance d de 1500 $\mu$m d'un capteur CMOS. L'échantillon a été illuminé par une diode électroluminescente 11 dont la bande spectrale d'émission est centrée sur une longueur d'onde de 450 nm et située à une distance D=1,4 cm de l'échantillon. Un tel dispositif est décrit dans US10379027.

On a disposait de 48 images d'échantillons, dans lesquelles on ne disposait uniquement que des proportions de cellules vivantes ou mortes. La figure 5 représente la proportion de cellules vivantes (axe des ordonnées) pour chaque échantillon (axe des abscisses). On a effectué l'apprentissage de l'algorithme en utilisant 46 images parmi les 48 images disponibles. Les images numérotées 21 et 44 ont été utilisées pour tester l'algorithme. L'algorithme a annoté individuellement les cellules dans les deux images de test (images 21 et 44). Les annotations individuelles effectuées par l'algorithme permettent de remonter à un taux de viabilité de 94% pour l'image 21 (la valeur réelle étant de 97%) et 6% pour l'image 41 (valeur exacte 17%).

Cet exemple montre qu'il est possible de mettre en oeuvre l'apprentissage par proportions de labels à partir de caractéristiques différentes d'images. Dans l'exemple décrit en lien avec les figures 2A à 2C et 3A à 3C, la caractéristique de chaque cellule est une image de phase. On peut mettre en oeuvre d'autres caractéristiques, par exemple des profils représentatifs d'une propriété (module, phase) de l'onde lumineuse illuminant l'échantillon, les profils étant formés à différentes distances de l'échantillon. La formation de tels profils est décrite dans US10379027 ou US10481076 ou dans US10845286. Il s'agit d'illuminer un l'échantillon par une onde lumineuse et d'acquérir une image de l'échantillon par une modalité d'imagerie défocalisée (cf. figure 1B) ou sans lentille (cf. figure 1A). L'image acquise comporte des figures de diffraction de particules de l'échantillon. On applique ensuite un algorithme de reconstruction holographique à l'image acquise, de façon à obtenir pour au moins une particule, un profil d'une propriété optique de l'onde lumineuse illuminant l'échantillon à différentes distances de l'échantillon, entre l'échantillon et le capteur d'image. Le profil est établi selon un axe parallèle à l'axe selon lequel l'échantillon est illuminé (par exemple l'axe Z sur les figures 1A et 1B), l'axe du profil passant par la particule examinée.

Dans les documents précités, on a montré que ce type de profil peut être utilisé pour caractériser une particule. La mise en oeuvre de l'algorithme de reconstruction holographique, à partir de l'image acquise, permet d'obtenir une expression complexe de l'onde lumineuse se propageant à travers l'échantillon, jusqu'au capteur d'image. Le profil est déterminé à partir de l'expression complexe de l'onde lumineuse, selon un axe parallèle à l'axe de propagation de la lumière, et passant par la particule analysé. Il peut par exemple s'agir d'un profil de la phase, ou du module de l'expression complexe. D'une façon plus générale, il s'agit d'un profil établi à partir de l'expression complexe de l'onde lumineuse à différentes distances de l'échantillon, le long de l'axe de propagation de la lumière, en particulier entre l'échantillon et le capteur d'image. Le profil est établi à partir du module ou de la phase ou de la partie réelle ou de la partie imaginaire de l'expression complexe.

Au cours de l'apprentissage, le réseau de neurones est alimenté par différents profils de particules, ces derniers étant annotés par la proportion de particules dans un état donné, dans l'échantillon d'apprentissage considéré (par exemple une proportion de particules vivantes ou mortes). Au cours de l'utilisation du réseau de neurones, sur des échantillons inconnus, les données d'entrée du réseau sont un ou plusieurs profils établis sur des particules dont l'état n'est pas connu.

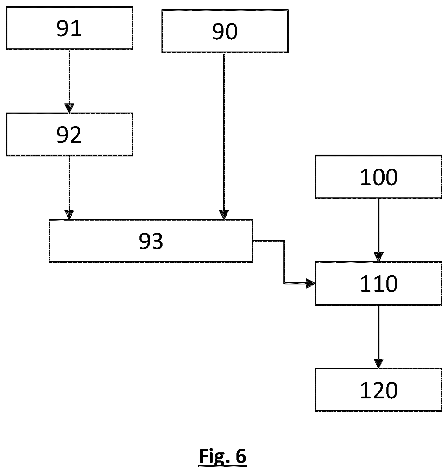

La figure 6 montre les principales étapes d'un procédé selon l'invention.

Etape 100 : mesure d'une caractéristique de particules de l'échantillon : il peut par exemple s'agir d'une image de l'échantillon, montrant différentes particules, auquel cas la caractéristique de chaque particule est la trace, ou image élémentaire, de chaque particule sur l'image. Il peut également s'agir de différents profils de particules formant l'échantillon.

Etape 110 : utilisation de la caractéristique de chaque particule de l'échantillon en tant que donnée d'entrée de l'algorithme d'intelligence artificielle. L'algorithme est programmé pour classifier les particules en fonction des caractéristiques ont été introduites en tant que données d'entrée.

Etape 120 : caractérisation de chaque particule en fonction de la sortie de l'algorithme.

L'algorithme a préalablement fait l'objet d'un apprentissage, sur des échantillons d'apprentissage comportant des particules d'apprentissage. L'apprentissage comportant les étapes suivantes :

Etape 90 : détermination d'une caractéristique de chaque particule d'apprentissage : il s'agit par exemple d'une image élémentaire ou d'un profil de chaque particule.

Etape 91 : définition de classes de particules. Puis, dans chaque échantillon d'apprentissage, détermination d'une proportion de particules d'apprentissage appartenant à la même classe.

Etape 92 : annotation de chaque particule d'apprentissage en fonction de la proportion déterminée lors de l'étape 91 dans l'échantillon d'apprentissage auquel appartient la particule d'apprentissage.

Etape 93 : pour chaque particule d'apprentissage, utilisation de la caractéristique résultant de l'étape 90, annotée par l'annotation résultant de l'étape 92, en tant que données d'apprentissage de l'algorithme.

L'invention permet d'effectuer une classification de particules biologiques, sans nécessiter une annotation des particules utilisées lors de l'apprentissage. La classification peut être par exemple :

- une détermination de l'état d'une cellule, chaque classe correspondant à un état prédéterminé de la cellule ;
- une détermination d'un volume ou d'une dimension d'une cellule, chaque classe correspondant à au moins une valeur du volume ou d'une dimension de chaque cellule ;
- une détermination d'une caractéristique morphologique de chaque cellule, chaque classe correspondant à au moins une caractéristique morphologique de le chaque cellule
- une détermination d'une propriété optique de chaque cellule, par exemple l'indice de réfraction d'une cellule, chaque classe correspondant à au moins une valeur de ladite propriété optique ;

- une détermination d'un type de chaque cellule, chaque classe correspondant à un type de cellule prédéterminé.

**Revendications**

1. Procédé de caractérisation de particules biologiques d'un échantillon, la caractérisation assignant une classe à chaque particule, chaque classe étant représentative d'une propriété de la particule, le procédé comportant :

   - a) mesure d'une caractéristique d'au moins une particule de l'échantillon ;
   - b) traitement de la caractéristique de la ou de chaque particule par un algorithme d'intelligence artificielle;
   - c) à partir du traitement, caractérisation des particules de l'échantillon, de manière à assigner une classe à chaque particule ;
   - le procédé étant **caractérisé en ce que** l'algorithme d'intelligence artificielle a préalablement fait l'objet d'un apprentissage par proportion de labels, avec au moins un échantillon d'apprentissage, comportant des particules d'apprentissage, l'apprentissage comportant,:
   - (i) détermination d'une caractéristique de chaque particule d'apprentissage;
   - (ii) détermination d'une proportion de particules d'apprentissage appartenant à la même classe;
   - (iii) annotation de chaque particule d'apprentissage en fonction de la proportion déterminée lors de l'étape (ii).
   - (iv) utilisation des caractéristiques des particules d'apprentissage, déterminées lors de (i) respectivement annotées à partir des annotations résultant de (iii) en tant que données d'apprentissage de l'algorithme d'intelligence artificielle ;

   le procédé étant tel que :

   - les étapes (i) à (iii) sont effectuées pour différents échantillons d'apprentissage ;
   - chaque étape (ii) comporte une détermination d'une proportion de particules d'apprentissage, appartenant à la même classe, respectivement dans chaque échantillon d'apprentissage ;
   - les annotations respectives des particules d'apprentissage d'un même échantillon d'apprentissage sont identiques.

2. Procédé selon la revendication 1, dans lequel la propriété est choisie parmi :

   - un état d'une particule, chaque classe correspondant à un état prédéterminé de la particule ;
   - un volume ou une dimension d'une particule, chaque classe correspondant à au moins une valeur du volume ou d'une dimension de chaque particule ;
   - une caractéristique morphologique de chaque particule, chaque classe correspondant à au moins une caractéristique morphologique de chaque particule ;
   - une propriété optique de chaque particule, chaque classe correspondant à au moins une valeur de ladite propriété optique ;
   - un type de chaque particule, chaque classe correspondant à un type de particule prédéterminé.

3. Procédé selon l'une quelconque des revendications précédentes, dans lequel

   - la caractéristique de chaque particule est une image de ladite particule ;
   - lors de l'étape i), chaque caractéristique est une image individuelle de chaque particule du ou de chaque échantillon d'apprentissage.

4. Procédé selon la revendication 3, dans lequel

   - l'étape a) comporte une acquisition d'une image d'un ensemble de particules de l'échantillon ;
   - lors de l'étape b), l'image acquise lors de l'étape a) est utilisée en tant que donnée d'entrée de l'algorithme d'intelligence artificielle.

5. Procédé selon la revendication 4 dans lequel :

   - l'étape a) comporte :

     • Illumination de l'échantillon par une onde lumineuse et acquisition d'une image de l'échantillon par une modalité d'imagerie défocalisée ou sans lentille, l'image acquise comportant des figures de diffraction de particules de l'échantillon ;
     • une application d'un algorithme de reconstruction holographique à l'image acquise de l'échantillon, de façon à obtenir une image de phase de chaque particule, l'image de phase étant représentative d'un déphasage, par chaque particule, de l'onde lumineuse illuminant l'échantillon ;
     • l'image de phase de chaque particule forme la caractéristique de chaque particule ;

   - lors de l'étape b), l'image de phase obtenue lors de l'étape a) est utilisée en tant que donnée d'entrée de algorithme d'intelligence artificielle.

**6.** Procédé selon la revendication 5, dans lequel lors de l'étape (i), la caractéristique de chaque particule est une image de phase de chaque particule.

**7.** Procédé selon l'une quelconque des revendications 1 à 4 dans lequel

    - l'étape a) comporte

        • illumination de l'échantillon par une onde lumineuse et acquisition d'une image de l'échantillon par une modalité d'imagerie défocalisée ou sans lentille, l'image comportant des figures de diffraction de particules de l'échantillon ;
        • une application d'un algorithme de reconstruction holographique à l'image acquise de l'échantillon, de façon à obtenir pour au moins une particule, un profil d'une propriété optique de l'onde lumineuse illuminant l'échantillon à différentes distances de l'échantillon ;
        • le profil de la ou de chaque particule forme la caractéristique de ladite particule ;

    - lors de l'étape b), le ou chaque profil obtenu lors de l'étape a) est utilisé en tant que donnée d'entrée de algorithme d'intelligence artificielle.

**8.** Procédé selon l'une quelconque des revendications précédentes, dans lequel chaque particule est une cellule ou un microorganisme.

**9.** Dispositif de de caractérisation de particules biologiques d'un échantillon, la caractérisation étant destinée à assigner une classe à chaque particule, chaque classe étant représentative d'une propriété de la particule, le dispositif comportant :

    - une source de lumière (11), configurée pour illuminer l'échantillon ;
    - un capteur d'image (16), configuré pour acquérir une image de l'échantillon ;
    - une unité de traitement (20), programmée pour mettre en oeuvre les étapes b) et c) d'un procédé selon l'une quelconque des revendications précédentes, l'algorithme d'intelligence artificielle mis en oeuvre par l'unité de traitement ayant préalablement fait l'objet d'un apprentissage par proportion de labels, à partir d'échantillons d'apprentissage, comportant des particules d'apprentissage, l'apprentissage mettant en oeuvre les étapes (i) à (iv) d'un procédé selon l'une quelconque des revendications précédentes.

**Fig. 1A**

**Fig. 1B**

Fig. 2A

Fig. 2B

Fig. 2C

**Fig. 3A**

**Fig. 3B**

**Fig. 3C**

**Fig. 4A**

**Fig. 4B**

**Fig. 4C**

**Fig. 5**

**Fig. 6**

# EP 4 394 730 A1

Europäisches
Patentamt

European
Patent Office

Office européen
des brevets

## RAPPORT DE RECHERCHE EUROPEENNE

Numéro de la demande

EP 23 22 0204

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2019/180147 A1 (ZHANG YONGMIAN [US] ET AL) 13 juin 2019 (2019-06-13) * alinéa [0022] – alinéa [0077]; figures 1-7 * | 1-9 | INV. G06V20/69 G06V10/82 G06V10/778 |
| | ----- | | |
| A | US 2019/101484 A1 (HERVE LIONEL [FR] ET AL) 4 avril 2019 (2019-04-04) * alinéa [0052] – alinéa [0147]; figures 1-6 * | 1-9 | |
| | ----- | | |
| A | US 2018/113064 A1 (ALLIER CEDRIC [FR] ET AL) 26 avril 2018 (2018-04-26) * alinéa [0055] – alinéa [0194]; figures 1-9 * | 1-9 | |
| | ----- | | |

DOMAINES TECHNIQUES RECHERCHES (IPC)

G06V

Le présent rapport a été établi pour toutes les revendications

| Lieu de la recherche | Date d'achèvement de la recherche | Examinateur |
|---|---|---|
| La Haye | 13 février 2024 | Thibault, Guillaume |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

16

## ANNEXE AU RAPPORT DE RECHERCHE EUROPEENNE
## RELATIF A LA DEMANDE DE BREVET EUROPEEN NO.

EP 23 22 0204

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-02-2024

| Document brevet cité au rapport de recherche | Date de publication | Membre(s) de la famille de brevet(s) | Date de publication |
|---|---|---|---|
| US 2019180147 A1 | 13-06-2019 | EP 3478728 A1 | 08-05-2019 |
| | | JP 6941123 B2 | 29-09-2021 |
| | | JP 2019521443 A | 25-07-2019 |
| | | US 2019180147 A1 | 13-06-2019 |
| | | WO 2018005413 A1 | 04-01-2018 |
| US 2019101484 A1 | 04-04-2019 | EP 3433679 A1 | 30-01-2019 |
| | | FR 3049347 A1 | 29-09-2017 |
| | | US 2019101484 A1 | 04-04-2019 |
| | | WO 2017162985 A1 | 28-09-2017 |
| US 2018113064 A1 | 26-04-2018 | EP 3274694 A1 | 31-01-2018 |
| | | FR 3034197 A1 | 30-09-2016 |
| | | US 2018113064 A1 | 26-04-2018 |
| | | WO 2016151249 A1 | 29-09-2016 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2021156192 A
- EP 3995991 A
- US 2019180147 A1
- US 10816454 B
- US 10379027 B
- US 10481076 B
- US 10845286 B